# EUROPEAN PATENT SPECIFICATION

(11) **EP 0 483 916 B1**
(45) Date of publication and mention of the grant of the patent: **17.06.1998**
(21) Application number: 91202767.9
(22) Date of filing: 25.10.1991
(51) Int. Cl.: C08L 69/00

(54) **Polymer mixture containing an aromatic polycarbonate resin and an impact modifier**
Polymermischung, die ein aromatisches Polycarbonatharz und ein Mittel zur Erhöhung der Schlagzähigkeit enthält
Composition de polymère contenant une résine de polycarbonate aromatique et un agent améliorant la résistance au choc

(30) Priority: 01.11.1990 NL 9002379
(43) Date of publication of application: 06.05.1992
(73) Proprietor: DSM N.V., 6411 TE Heerlen (NL)
(72) Inventor: Looman, Titus Paulus Maria, NL-6224 HV Maastricht (NL)

(56) References cited:
- EP-A- 0 173 358
- EP-A- 0 230 609
- EP-A- 0 240 038
- EP-A- 0 387 596
- FR-A- 2 345 486
- FR-A- 2 389 660

## Description

### 1. Field of the Invention

The invention relates to a polymer mixture based on an aromatic polycarbonate resin and a certain combination of impact modifiers.

### 2. Background of the Invention

Such polymer mixtures based on an aromatic polycarbonate resin and an impact modifier are described in, for example, the Dutch patent 183467, in which technicalgrade thermoplastic resins, including aromatic polycarbonate resins, are mixed with partially hydrogenated block copolymers comprising at least two terminal polymer blocks A of a monoalkenylarene with an average molecular weight of between 5,000 and 125,000 and at least one intermediate polymer block B of a conjugated diene with an average molecular weight of between 10,000 and 300,000, the terminal polymer blocks A constituting between 8 and 55 wt.% of the block polymer, while not more than 25% of the aromatic double bonds of polymer blocks A and at least 80% of the aliphatic double bonds of polymer blocks B are reduced through hydrogenation.

A disadvantage of polymer mixtures according to the Dutch patent 183467 is their poor resistance to organic solvents and insufficient resistance to stress cracking.

Polymer mixtures have now been found that have a greatly improved resistance to organic solvents and good resistance to stress cracking.

### SUMMARY OF THE INVENTION

An object of the invention is to obtain polymer mixtures having greatly improved resistance to organic solvents and good resistance to stress cracking.

The invention further relates to polymer mixtures which comprise the following constituents:
a. 80-99 wt.% of an aromatic polycarbonate resin;
b. 0.5-5 wt.% of one or more partially hydrogenated block copolymers of a certain type ; and
c. 0.5-15 wt.% of one or more graft copolymers consisting essentially of a certain rubber core and a surrounding phase consisting of one or more vinyl aromatic compounds and acrylonitrile.

### DETAILED DESCRIPTION OF THE PREFERRED EMBODIMENT

The present invention relates to polymer mixtures which comprise the following constituents:
a. 80-99 wt.% of an aromatic polycarbonate resin;
b. 0.5-5 wt.% of one or more partially hydrogenated block copolymers with at least two terminal polymer blocks A of a monoalkenylarene with an average molecular weight of between 5,000 and 125,000 and at least one intermediate polymer block B of a conjugated diene with an average molecular weight of between 10,000 and 300,000, the terminal polymer blocks A being between 8 and 55 wt.% of the block copolymer, while not more than 25% of the aromatic double bonds of polymer blocks A and at least 80% of the aliphatic double bonds of polymer blocks B are reduced through hydrogenation and
c. 0.5-15 wt.% of one or more graft copolymers consisting essentially of a conjugated diene core and a surrounding phase of vinyl aromatic monomer and acrylonitrile units, the diene core being at least one of polybutadiene rubber and styrene-butadiene rubber.

The present invention preferably relates to a polymer mixture of the above kind which contains 82-99 wt.% aromatic polycarbonate resin, 0.5-4 wt.% block copolymer and 0.5-14 wt.% graft copolymer.

The present invention also relates to the above polymer mixture of aromatic polycarbonate resin, block copolymer and graft copolymer, wherein the graft copolymer is acrylonitrile-butadiene-styrene.

Aromatic polycarbonates can be prepared for example in the conventional manner, by reacting a bivalent phenol with a carbonate initial product in an interfacial polymerization process.

Examples of some bivalent phenols that can be used are 4,4'-dihydroxybiphenyl, 2,2-bis(4-hydroxyphenyl)propane (bisphenol A), 2,2-bis(4-hydroxy-3-methylphenyl)propane, 2,2-bis-(3-chloro-4-hydroxyphenyl)propane, 2,2-bis-(3,5-dimethyl-4-hydroxyphenyl)propane, 2,4-bis-(4-hydroxyphenyl)-2-methylbutane, 2,4-bis-(3,5-dimethyl-4-hydroxyphenyl)-2-methylbutane, 4,4-bis(4-hydroxyphenyl)heptane, bis-(3,5-dimethyl-4-hydroxyphenyl)methane, 1,1-bis-(4-hydroxyphenyl)cyclohexane, 1,1-bis-(3,5-dimethyl-4-hydroxyphenyl)cyclohexane, 2,2-(3,5,3',5'-tetrachloro-4,4'-dihydroxydiphenyl)propane, 2,2-(3,5,3',5'-tetrabromo-4,4'-dihydroxydiphenyl)propane, (3,3'-dichloro-4,4'-dihydroxyphenyl)methane, bis-(3,5-dimethyl-4-hydroxyphenyl) sulphone, bis-4-hydroxyphenyl sulphone, bis-4-hydroxyphenyl sulphide.

The carbonate initial product can be a carbonyl halogenide, a halogen formate or a carbonate ester. Examples of carbonyl halogenides are carbonyl chloride and carbonyl bromide. Examples of suitable halogen formates are bis-halogen formates of bivalent phenols such as hydroquinone or of glycols such as ethylene glycol. Examples of suitable carbonate esters are diphenyl carbonate, di(chlorophenyl)carbonate, di(bromophenyl)carbonate, di(alkylphenyl)carbonate and phenyltolylcarbonate, and mixtures thereof. Although other carbonate initial products can also be used, carbonyl halogenides are preferred, in particular carbonyl chloride, also known as phosgene.

The aromatic polycarbonate resins used according to the invention can be prepared with the aid of a catalyst, an acid acceptor and a compound for regulating the molecular weight.

Examples of catalysts are tertiary amines such as triethylamine, tripropylamine and N,N-dimethylaniline, quaternary ammonium compounds such as tetraethylammonium bromide and quaternary phosphonium compounds such as methyltriphenylphosphonium bromide.

Examples of organic acid acceptors are pyridine, triethylamine and dimethylaniline. Examples of inorganic acid acceptors are hydroxides, carbonates, bicarbonates and phosphates of an alkali metal or an alkaline-earth metal.

Examples of compounds for regulating the molecular weight are monovalent phenols such as phenol and parabromophenol and secondary amines.

Suitable block copolymers for the polymer mixtures according to the invention are described in the Dutch patent 183467 and are commercially available under the trade names Kraton G-1650, Kraton G-1651, Kraton G-1652, Kraton G-1657, Kraton G-1726 and Kraton G-1855 (Shell).

A suitable graft copolymer is of the known acrylonitrile-butadiene-styrene type with a rubber content of 15-60 wt.%. Such polymers are prepared by grafting a vinylaromatic compound such as styrene and/or α-methylstyrene and acrylonitrile onto a polybutadiene rubber and/or styrene-butadiene rubber.

For example, suitable graft copolymers for the polymer mixtures according to the invention are the ABS graft copolymers commercially available under the trade name RONFALIN (DSM's registered trademark).

NL-A-8402555 describes polymer mixtures based on an aromatic polycarbonate resin, a block copolymer which is commercially available under the name Kraton G and a graft copolymer of the methylmethacrylate-butadiene-styrene (MBS) type. These mixtures are less resistant to organic solvents and less resistant to stress cracking than the products according to the present invention.

In a preferred embodiment, other additives commonly used for aromatic polycarbonate resins can also be used, for example pigments, heat stabilizers such as organic phosphites, and agents for preventing hydrolysis, flame retardants, agents for preventing dripping and inert fillers such as glass fibers.

The method for preparing the polymer mixtures according to the invention is not critical. Any known mixing method is suitable. But, in a preferred embodiment, the constituents and the additives are mixed in dry condition, after which the mixture obtained is extruded and granulated.

The invention is illustrated with the aid of the following non-limiting examples.

### EXAMPLES

### Preparation of Polycarbonate Resins

The polycarbonate resins according to the invention were prepared as follows:

300 parts by weight of bisphenol A and 6.2 parts by weight of para-tertiary-butylphenol were suspended in 1 litre of water in a flask equipped with a stirrer and a gas feed tube. The oxygen was removed from the reaction mixture by passing nitrogen though the mixture for 20 minutes, with stirring. Then 250 parts by weight of 43 wt.% sodium hydroxide solution and 650 parts by weight of methylene chloride were added. The mixture was brought to a temperature of 25°C and was maintained at this temperature by cooling. 160 parts by weight of phosgene were introduced in 90 minutes. 20 minutes after the start of the introduction of the phosgene another 50 parts by weight of sodium hydroxide solution were added.

1 part by weight of triethylamine was added to the solution obtained, after which the mixture was stirred for 20 minutes. Extra methylene chloride was added to reduce the viscosity of the highly viscous solution. The phase rich in water was separated off and the organic phase was rinsed with water until it no longer contained salt. The aromatic polycarbonate resin was isolated from the solution and dried.

The aromatic polycarbonate resin had a viscosity of 1.29, as determined in a 0.5 wt.% solution in methylene chloride. This corresponds to a molecular weight of about 30,000.

Polycarbonates with different molecular weights were prepared in a similar manner.

### Example 1

100 parts of polycarbonate, prepared according to the method described above and having a molecular weight of 23550, were mixed for 2 minutes, using a high-speed agitator, with 0.1 wt.% organic phosphite, 0.2 wt.% phenolic antioxidant and 0.3 wt.% ethylene glycol distearate. The powder mixture was extruded using a 25 mm Werner & Pfleiderer twin-screw extruder, at a temperature of 280°C, and was then granulated. With the aid of a Krauss-Maffei injection molding machine test specimens were produced, at a temperature of 300°C, which were used to determine the following properties:
A) Tensile Strength and Elongation at Break
   ISO tensile strength test bars were tested with the aid of a Zwick tensile tester, at a crosshead speed of 50 mm/min, at room temperature and 50% relative humidity, according to ISO standard R527. The tensile strength at the yield point and the elongation at break were measured.
B) IZOD Impact Resistance
   IZOD notched test bars (ISO type A) were tested using a Zwick notched impact resistance tester with a 2.75 Joule striker. The tests were carried out at -15°C, according to standard ISO 180. The notched impact resistance was measured.
C) Falling Dart Impact Resistance
   Falling dart discs with a notch measuring 15x2x2 mm were tested using a falling dart apparatus, at room temperature and at -30°C. The absorbed energy was measured.
D) Tensile Strength and Elongation at Break after Immersion in Fuel C
   ISO test bars were contacted with a mixture of 50 wt.% toluene and 50 wt.% isooctane (fuel C) for 30 seconds, without strain and with 0.3% and 0.5% bending deformation. The bars were dried for 24 hours at room temperature and were then tested, also at room temperature, according to ISO R527, at a crosshead speed of 50 mm/min. The tensile strength at the yield point and the elongation at break were measured.
E) IZOD Notched Impact Resistance after Immersion in Fuel C
   IZOD notched test bars (ISO type A) were immersed in fuel C for 30 seconds, dried at room temperature for 24 hours and then tested at -15°C according to ISO 180, using a 2.75 Joule striker. The absorbed energy was measured.

### Examples 2 through 6

In the same way as in example 1 mixtures were prepared that consisted of polycarbonate, hydrogenated styrene-butadiene-styrene block copolymers (Kraton G 1650) and MBS shell/core rubber (Paraloid EXL 3647, Rohm and Haas). MBS shell/core rubber consists of a polybutadiene core onto which styrene and methylmethacrylate are grafted. The table shows the compositions of the various mixtures and their measured properties.

### Examples 7 through 10

In the same way as in example 1 mixtures were prepared that consisted of polycarbonate, hydrogenated styrene-butadiene-styrene block copolymers (Kraton G 1650) and ABS shell/core rubber (RONFALIN TZ-230, DSM). ABS shell/core rubber consists of a polybutadiene core onto which styrene and acrylonitrile are grafted. The table shows the compositions of the various mixtures and their measured properties.

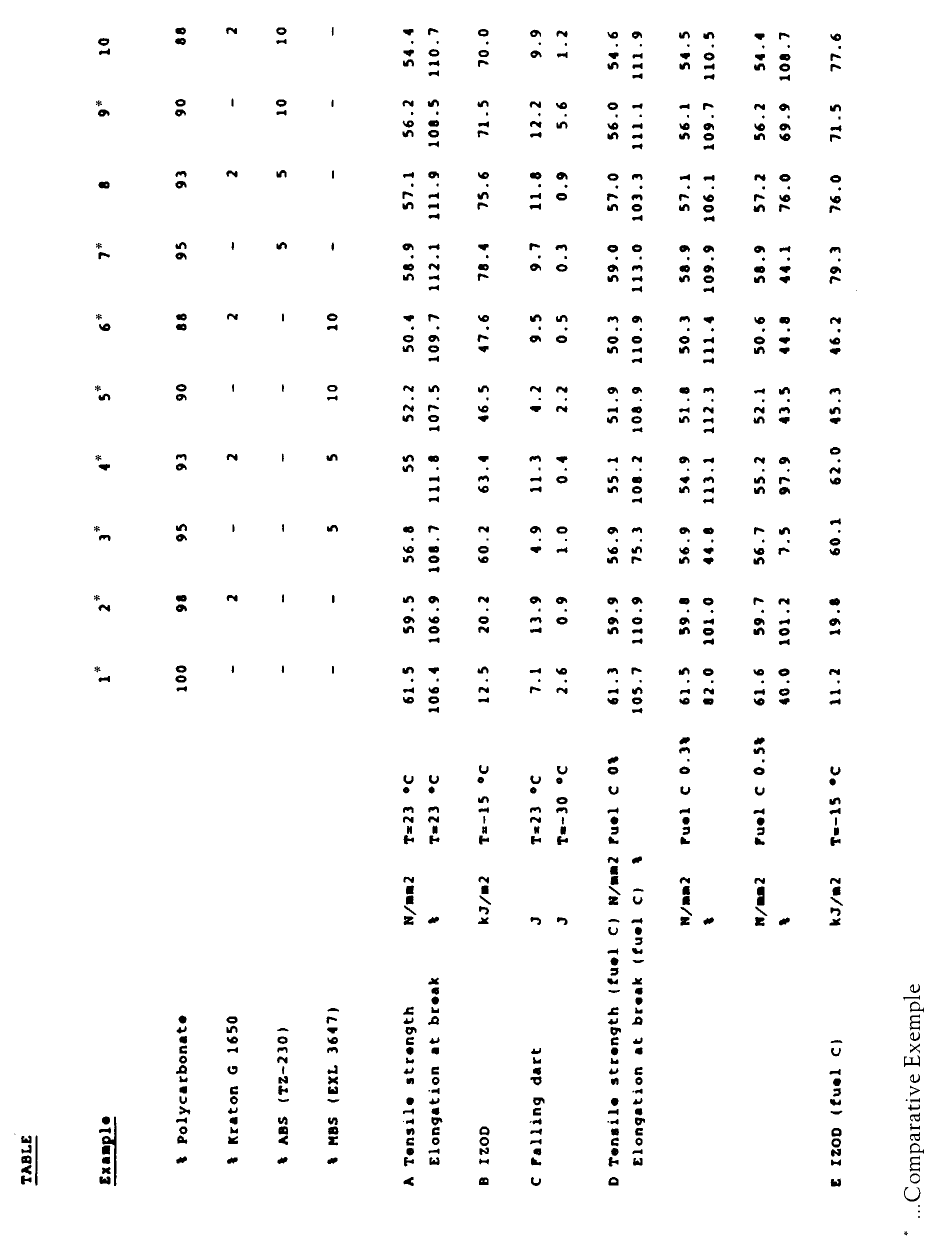

## Claims

1. A polymer mixture comprising:
a. 80-99 wt.% of an aromatic polycarbonate resin;
b. 0.5-5 wt.% of one or more partially hydrogenated block copolymers having at least two terminal polymer blocks A of a monoalkenylarene with an average molecular weight of between 5,000 and 125,000 and at least one intermediate polymer block B of a conjugated diene with an average molecular weight of between 10,000 and 300,000, wherein the terminal polymer blocks A are 8-55 wt.% of the block copolymer, and not more than 25% of the aromatic double bonds of polymer blocks A and at least 80% of the aliphatic double bonds of polymer blocks B are reduced through hydrogenation; and
c. 0.5-15 wt.% of one or more graft copolymers consisting essentially of a conjugated diene core and a surrounding phase of acrylonitrile and vinyl aromatic monomer units, the diene core being at least one of polybutadiene rubber and styrene-butadiene rubber.

2. The polymer mixture according to claim 1, wherein the vinyl aromatic monomer units are styrene and/or α-methyl styrene units.

3. The polymer mixture according to claim 1 or 2, comprising
a. 82-99 wt.% of the aromatic polycarbonate resin;
b. 0.5-4 wt.% of the block copolymer; and
c. 0.5-14 wt.% of the graft copolymer.

4. The polymer mixture according to any one of claims 1-3, wherein the graft copolymer is an acrylonitrile-butadiene-styrene graft copolymer.

5. The polymer mixture according to claim 4, wherein the graft copolymer has a rubber content of 15-60 wt.%.

## Patentansprüche

1. Polymer-Mischung, welche umfaßt:
a. 80 bis 99 Masse-% eines aromatischen Polycarbonatharzes;
b. 0,5 bis 5 Masse-% eines oder mehrerer teilweise hydrierter Blockcopolymere mit zumindest zwei terminalen Polymerblöcken A eines Monoalkenylarens mit einer mittleren Molmasse zwischen 5.000 und 125.000 und zumindest einem Zwischenpolymerblock B eines konjugierten Diens mit einer mittleren Molmasse zwischen 10.000 und 300.000, wobei die terminalen Polymerblöcke A zwischen 8 und 55 Masse-% des Blockcopolymers ausmachen, und nicht mehr als 25 % der aromatischen Doppelbindungen der Polymerblöcke A und zumindest 80 % der aliphatischen Doppelbindungen der Polymerblöcke B durch Hydrierung reduziert sind; und
c. 0,5 bis 15 Masse-% eines oder mehrerer Pfropfcopolymere, bestehend im wesentlichen aus einem konjugierten Dien-Kern und einer umgebenden Phase von Acrylnitril und Vinyl-aromatischen Monomer-Einheiten, wobei der Dien-Kern zumindest einer von Polybutadien-Kautschuk und Styrol-Butadien-Kautschuk ist.

2. Polymer-Mischung nach Anspruch 1, worin die Vinyl-aromatischen Monomer-Einheiten Styrol und/oder α-Methyl-Styrol-Einheiten sind.

3. Polymer-Mischung nach Anspruch 1 oder 2, welche umfaßt:
a. 82 bis 99 Masse-% des aromatischen Polycarbonatharzes;
b. 0,5 bis 4 Masse-% des Blockcopolymers; und
c. 0,5 bis 14 Masse-% des Pfropfcopolymers.

4. Polymer-Mischung nach einem der Ansprüche 1 bis 3, worin das Pfropfcopolymer ein Acrylnitril-Butadien-Styrol-Pfropfcopolymer ist.

5. Polymer-Mischung nach Anspruch 4, worin das Pfropfcopolymer einen Kautschukgehalt von 15 bis 60 Masse-% hat.

## Revendications

1. Mélange polymère comprenant :
a. 80 à 99% en poids d'une résine de polycarbonate aromatique ;
b. 0,5 à 5% en poids d'un ou plusieurs copolymères séquencés partiellement hydrogénés ayant au moins deux séquences polymères terminales A d'un monoalcénylarène ayant une masse moléculaire moyenne entre 5000 et 125000 et au moins une séquence polymère intermédiaire B d'un diène conjugué ayant une masse moléculaire moyenne entre 10000 et 300000, dans lequel les séquences polymères terminales A forment 8 à 55% en poids du copolymère séquencé et pas plus de 25% des doubles liaisons aromatiques des séquences polymères A et au moins 80% des doubles liaisons aliphatiques des séquences polymères B sont réduites par hydrogénation ; et
c. 0,5 à 15% en poids d'un ou plusieurs copolymères greffés consistant essentiellement en un noyau de diène conjugué et en une phase environnante d'acrylonitrile et de motifs monomères vinyliques aromatiques, le noyau de diène étant au moins soit un caoutchouc polybutadiène soit un caoutchouc styrène/butadiène.

2. Mélange polymère selon la revendication 1, dans lequel les motifs monomères vinyliques aromatiques sont des motifs styrène et/ou alpha-méthylstyrène.

3. Mélange polymère selon la revendication 1 ou 2, comprenant :
a. 82 à 99% en poids de la résine de polycarbonate aromatique ;
b. 0,5 à 4% en poids du copolymère séquencé ; et
c. 0,5 à 14% en poids du copolymère greffé.

4. Mélange polymère selon l'une quelconque des revendications 1 à 3, dans lequel le copolymère greffé est un copolymère greffé acrylonitrile/butadiène/styrène.

5. Mélange polymère selon la revendication 4, dans lequel le copolymère greffé a une teneur en caoutchouc de 15 à 60% en poids.
